# EUROPÄISCHE PATENTSCHRIFT

(11) **EP 2 831 456 B1**
(45) Veröffentlichungstag und Bekanntmachung des Hinweises auf die Patenterteilung: **18.10.2017**
(21) Anmeldenummer: 13711362.7
(22) Anmeldetag: 21.03.2013
(51) Int. Cl.: F16D 65/097, F16D 55/226

(54) **SCHEIBENBREMSE MIT RÜCKSTELLEINRICHTUNG UND BREMSBELAG**
DISK BRAKE HAVING A RESTORING DEVICE AND A BRAKE LINING
FREIN À DISQUE DOTÉ D'UN DISPOSITIF DE RAPPEL ET D'UNE GARNITURE DE FREIN

(30) Priorität: 26.03.2012 DE 102012102584
(43) Veröffentlichungstag der Anmeldung: 04.02.2015
(73) Patentinhaber: KNORR-BREMSE Systeme für Nutzfahrzeuge GmbH, 80809 München (DE)
(72) Erfinder: BAUMGARTNER, Johann, 85368 Moosburg (DE); WERTH, Alexander, 80999 München (DE); WEGGARTNER, Robert, 84347 Pfarrkirchen (DE); KIELBASA, Rudolf, 85757 Karlsfeld (DE); FISCHL, Tobias, 94474 Vilshofen (DE)
(86) Internationale Anmeldenummer: PCT/EP2013/055887
(87) Internationale Veröffentlichungsnummer: WO 2013/143957

(56) Entgegenhaltungen:
- EP-A1- 1 717 476
- WO-A1-03/027526
- GB-A- 994 827
- US-A- 5 687 817

## Beschreibung

Die Erfindung betrifft eine Scheibenbremse, insbesondere für ein Kraftfahrzeug, nach dem Oberbegriff des Anspruchs 1. Die Erfindung bezieht sich auch auf einen entsprechenden Bremsbelag.

Derartige Scheibenbremsen sind üblicherweise druckluftbetätigt und mit automatisch wirkenden, mechanischen Belagverschleißnachstellvorrichtungen ausgestattet. Diese Belagverschleißnachstellvorrichtungen verkleinern ein zu groß gewordenes Lüftspiel.

Restschleifmomente der Radbremsen, insbesondere von Scheibenbremsen, können bei kombinierten Schwerlastfahrzeugen einen bis zu 1 % höheren Kraftstoffverbrauch hervorrufen. Darüber hinaus tritt infolge des ständigen Schleifens der Bremsbeläge ein erhöhter Bremsbelagverschleiß ein, wodurch die Wartungskosten des Fahrzeugs erhöht werden. Ursache dieser Restschleifmomente ist ein nicht vollständiges Lösen der Bremsbeläge von der Bremsscheibe nach einem Bremsvorgang.

Zur Vermeidung dieser Restschleifmomente ist es erforderlich, beim Lösen der Bremse nach einer vorhergehenden Bremsung durch aktives Zurückziehen der Bremsbeläge einen Mindestluftspalt (Mindestlüftspiel) zwischen den Reibflächen der Bremsbeläge und der Bremsscheibenreibfläche herzustellen. Hierzu sind unterschiedliche Methoden bekannt.

Bei Festsattel-Scheibenbremsen, welche eine feststehende Position von Bremssattel und Bremsscheibe aufweisen, ist es ausreichend, die Bremsbeläge mit dem auf den jeweiligen Bremsbelag einwirkenden Betätigungskolben so zu verbinden, dass die Betätigungskolben beim Lösen der Bremse die Bremsbeläge in ihrer Rückzugbewegung mitnehmen und auf diese Weise das Lüftspiel zwischen Bremsbelägen und Bremsscheibe wiederherstellen. Mit dieser Maßnahme ist bei Festsattel-Scheibenbremsen eine weitgehende Vermeidung von Restschleifmomenten möglich.

Bei Schiebesattel-Scheibenbremsen kann dagegen ein ausreichendes Lösen der Bremsbeläge nicht allein durch eine rückzugsfähige Anbindung derselben an die Betätigungskolben bzw. an den Sattelrücken erzielt werden, da der Bremssattel in seiner Schiebeführung frei beweglich bleibt. Das kann dazu führen, dass einer der beiden Bremsbeläge, in der Regel der sattelseitige Bremsbelag, noch mit der Bremsscheibe in Schleifkontakt bleibt.

Bei Schiebesattel-Scheibenbremsen wird deshalb in Betracht gezogen, dem Bremssattel im nicht betätigten Zustand mit Hilfe von an den Schiebführungen angeordneten Klemmelementen eine quasi fixe Position zu geben, wodurch eine beidseitige Lüftspieleinstellung ermöglicht wird. Dies illustriert DE 10 2007 001 213 B4. Diese Lösung ist relativ aufwendig und kann störungsanfällig sein. Insbesondere in der Anwendung bei druckluftbetätigten Scheibenbremsen für schwere Nutzfahrzeuge kann dies mit in weiten Grenzen variablen Einflüssen durch Bauteiltoleranzen und Bauteildeformationen behaftet sein, was der Anwendung dieser Methode im Wege steht (Belagkompressibilität, Verschleißzustand der Beläge, Sattelverformung, Ansprechkraft der Nachstelleinrichtung, Klemmkraft des Klemmrings, Kraft der Rückstellfeder).

DE 22 30 949 C3 beschreibt eine Bremsbackenführung für eine Teilbelag-Scheibenbremse, bei welcher der Einfluss des Schiebesattels und damit seiner Bauteiltoleranzen weitgehend ausgeschlossen wird. Hierbei wird der Bremsbelag über Klemmelemente direkt reibschlüssig gegen die Führungsflächen des ortsfesten Bremsträgers abgestützt. Bei Betätigung der Bremse werden die Klemmelemente durch die Spreizkraft einer Blattfeder an diesen Führungsflächen gehalten, während der Bremsbelag unter Einwirkung der Betätigungskraft der Bremse eine begrenzte Bewegung ausführen kann, um in ausreichenden Reibkontakt mit der Bremsscheibe zu kommen. Nach der Bremsbetätigung wird der Bremsbelag durch die einerseits an diesem und andererseits an den Klemmelementen befestigte Blattfeder in seine Ausgangsposition zurückgezogen und so das Lüftspiel hergestellt. Bei Auftreten von Belag- und/oder Bremsscheibenverschleiß erreicht die Belagträgerplatte bei Bremsbetätigungen die Anschläge an den Wegbegrenzungen der Klemmelemente, wodurch diese unter Einwirkung der Betätigungskraft der Bremse gegen ihre Klemmkraft um einen dem eingetretenen Verschleiß entsprechenden Betrag in Richtung Bremsscheibe verschoben werden.

Auch diese einfach und praktikabel erscheinende Methode hat keine nennenswerte Anwendung gefunden. Die Klemmelemente können anfällig für Verschmutzung und Korrosion sein. Bei auftretenden Vibrationen können sie starken Belastungen durch den Bremsbelag ausgesetzt sein. Zudem können die Klemmelemente durch Festrosten/Blockieren die Wirkung der Bremse beeinträchtigen. Für die Anwendung in schweren Nutzfahrzeugen ist diese Lösung deshalb nicht geeignet.

Aus der WO 03/027526 A1 ist eine Scheibenbremse bekannt, bei der am Belagträger des Bremsbelages an den sich am Bremsträger abstützenden Bereichen des Belagträgers je ein Stift und ein an diesem verschiebbarer Federclip montiert ist, wobei der Federclip nach erfolgtem Bremsvorgang den Bremsbelag von der Bremsscheibe weg drückt.

Die Aufgabe der vorliegenden Erfindung besteht darin, eine verbesserte Scheibenbremse zu schaffen.

Eine weitere Aufgabe ist es, einen verbesserten Bremsbelag für eine Scheibenbremse bereitzustellen.

Die Aufgabe wird durch eine Scheibenbremse mit den Merkmalen des Anspruchs 1, und einen Bremsbelag mit den Merkmalen des Anspruchs 12 gelöst.

Die erfindungsgemäße Scheibenbremse weist jeweils eine Rückstelleinrichtung für zumindest den rückseitigen Bremsbelag auf, deren Lösefunktion nicht durch den Bremssattel beeinflusst wird. Die Rückstelleinrichtungen weisen einen einfachen Aufbau und hohe Robustheit auf. Eine Störung in der Wirkung der Rückstelleinrichtungen ruft keine Beeinflussung der Scheibenbremse hervor. Die Scheibenbremse kann druckluftbetätigt sein und ist besonders für schwere Nutzfahrzeuge geeignet, wobei Restschleifmomente und unnötiger Bremsbelagverschleiß vermieden wird.

Eine erfindungsgemäße Scheibenbremse , insbesondere für ein Kraftfahrzeug, umfasst eine Zuspannvorrichtung, einen eine Bremsscheibe übergreifenden Bremssattel, insbesondere ein Schiebesattel, einen Bremsträger mit in Umfangsrichtung der Bremsscheibe gegenüberliegenden Führungsflächen, zwischen welchen beidseitig der Bremsscheibe jeweils mindestens ein Bremsbelag mit einem Belagträger parallel zu einer Drehachse der Bremsscheibe verschiebbar geführt und von einer Zuspannkraft betätigbar ist, und jeweils eine Rückstelleinrichtung, welche zumindest den rückseitigen Bremsbelag mit dem Belagträger an dem Bremsträger abstützt. Jede Rückstelleinrichtung umfasst mindestens zwei Rückstellelemente, die parallel zur Drehachse der Bremsscheibe verschiebbar geführt an dem Belagträger zumindest des rückseitigen Bremsbelags angebracht sind.

Durch die Anwendung geeigneter Rückstellelemente können weitere störanfällige Bauteile, wie z.B. Klemmelemente, vermieden werden und die Bauteilanzahl wird verringert.

Die Rückstellelemente sind als in Aufnahmebohrungen des Belagträgers parallel zur Drehachse der Bremsscheibe verschiebbar gelagerten Hülsen ausgebildet, aus denen zur

Bremsscheibe hin jeweils ein elastisch gegen eine vorbestimmte Kraft rückstellbarer Rückstellkopf hervorsteht, der an einer aus den Führungsflächen in Umfangsrichtung der Bremsscheibe hervorstehenden Stützfläche abstützbar ist. Durch den in der Hülse abgestützten Rückstellkopf ist in einfacher Weise ein Loslösen des Bremsbelags nach erfolgtem Bremsvorgang ermöglicht.

Weitere vorteilhafte Ausgestaltungen sind in den Unteransprüchen angegeben.

Die Aufnahmebohrungen sind bevorzugt in an dem Belagträger an den in Umfangsrichtung der Bremsscheibe äußeren Randbereichen ausgebildeten Vertiefungen vorgesehen, um einen hinreichenden Bauraum für den Rückstellkopf und die elastischen Elemente und dessen Abstützung auch bei weit fortgeschrittenem Verschleiß der Reibbeläge des Bremsbelags zur Verfügung zu stellen.

Um die an der Reibfläche der Bremsscheibe angreifende Reibbelagfläche möglichst groß zu halten, ist jeder der Reibbeläge des Bremsbelags mit je Rückstellelementen zumindest teilweise umgreifenden Aussparungen ausgebildet.

Der Außenmantel der Rückstellelemente ist vorteilhaft als Spannhülse ausgebildet. Dies gewährleistet einerseits einen sicheren Sitz der Rückstellelemente im Belagträger und zum zweiten auch die notwendige Verschiebbarkeit der Rückstellelemente in den Aufnahmebohrungen des Belagträgers.

In einer alternativen Ausführungsvariante ist auch denkbar, dass der Außenmantel des Rückstellelements mit einer Rändelung versehen ist, welche bei zunehmendem Belagverschleiß immer weiter durch die Aufnahmebohrung des Belagträgers hindurch weg von der Bremsscheibe verschoben wird. Diese Variante ermöglicht ebenso einen sicheren Sitz als auch die notwendige Verschiebbarkeit des Rückstellelements.

Der Rückstellkopf weist bevorzugt eine Andruckfläche, einen senkrecht zur Andruckfläche in den Außenmantel hineinragenden Achskörper auf. Dieser Achskörper ist gemäß einer Ausführungsvariante überfedert in dem Außenmantel gehalten.

In einer alternativen Ausführungsvariante ist der Achskörper auf mindestens einer in dem Außenmantel gelagerten Feder, insbesondere einer Spiral- oder Tellerfeder, abgestützt.

Zur Verschiebewegbegrenzung des Rückstellkopfes in den Außenmantel des Rückstellelementes hinein ist die Andruckfläche vorzugsweise auf einer der Stützfläche zugewandten Stirnseite des Außenmantels abstützbar.

Um sowohl das Loslösen des Bremsbelags von der Bremsscheibe als auch die Nachstellung der Rückstellelemente infolge des Reibbelagverschleißes zu gewährleisten, sind die Rückstellelemente bis zu einer parallel zur Drehachse der Bremsscheibe wirkenden Kraft, die kleiner ist als die von der Zuspannvorrichtung bei einem Bremsvorgang aufgebrachte Zuspannkraft, ortsfest im Belagträger gehalten. Dadurch kann während des Zuspannens bei einem Bremsvorgang jedes der Rückstellelemente entsprechend in der Aufnahmebohrung des Belagträgers an eine Position geschoben werden, bei der der Reibbelag an der Bremsscheibe und der Rückstellkopf an der Stützfläche des Bremsträgers anliegt. Nach Beendigung des Bremsvorgangs bzw. der Zuspannung der Bremse wirkt die Vorspannkraft des Rückstellkopfes in dem Außenmantel des Rückstellelements derart, dass der Bremsbelag von der Bremsscheibe zurückgedrückt wird und den Bremsbelag unter Wiederherstellung eines Lüftspiels zwischen Bremsbelag und Bremsscheibe, in seiner Ausgangsposition zurückdrückt.

In einer weiteren vorteilhaften Ausführungsvariante weisen die Rückstelleinrichtungen auf unterschiedlichen Seiten der Bremsscheibe unterschiedlich hohe Rückstellkräfte auf. Daraus kann sich eine gleichmäßige Aufteilung der beidseitigen Lüftspiele ergeben.

Außerdem können die als Hülsen ausgebildeten Rückstellelemente beispielsweise durch die Wahl der Feder zusätzlich auch mit unterschiedlicher Steifheitscharakteristik ausgebildet sein. Dies ermöglicht, dass das Rückstellelement mit dem größeren Hub einen stärkeren Kräfteabfall verzeichnet, wodurch eine die Lüftspiele ausgleichende Wirkung auftritt.

Ein entsprechender Bremsbelag einer Scheibenbremse ist mit einer oben beschriebenen Rückstelleinrichtung ausgestattet.

Vorteilhafte Ausführungsvarianten der Erfindung werden nun anhand der beiliegenden Zeichnungen näher erläutert.

Es zeigen:
- Figur 1: eine schematische Draufsicht auf einen Teilabschnitt einer Ausführungsvariante einer erfindungsgemäßen Scheibenbremse,
- Figur 2: eine perspektivische Darstellung eines Bremsbelags mit Rückstellelementen,
- Figur 3: der Bremsbelag aus Figur 2 mit einem aufgeschnittenen Rückstellelement,
- Figuren 4 und 5: unterschiedliche perspektivische Detailansichten eines sich an einem Bremsträger abstützenden Rückstellelement eines Bremsbelags,
- Figur 6: eine schematische Schnittansicht des in dem Belagträger eines Bremsbelag angeordneten Rückstellelements aus Figur 5,
- Figuren 7 und 8: schematische Ansichten weiterer Ausführungsvarianten eines Rückstellelements,
- Figuren 9 bis 11: schematische Schnittansichten eines sich an einem Bremsträger abstützenden Rückstellelements, das im Belagträger eines Bremsbelags angeordnet ist, mit unterschiedlich verschlissenen Reibbelägen des Bremsbelags.

In der nachfolgenden Figurenbeschreibung beziehen sich Begriffe wie oben, unten, links, rechts, vorne, hinten usw. ausschließlich auf die in den jeweiligen Figuren gewählte beispielhafte Darstellung und Position der Scheibenbremse, des Bremsbelags, des Rückstellelements und dergleichen. Diese Begriffe sind nicht einschränkend zu verstehen, das heißt, durch verschiedene Arbeitsstellungen oder die spiegelsymmetrische Auslegung oder dergleichen können sich diese Bezüge ändern.

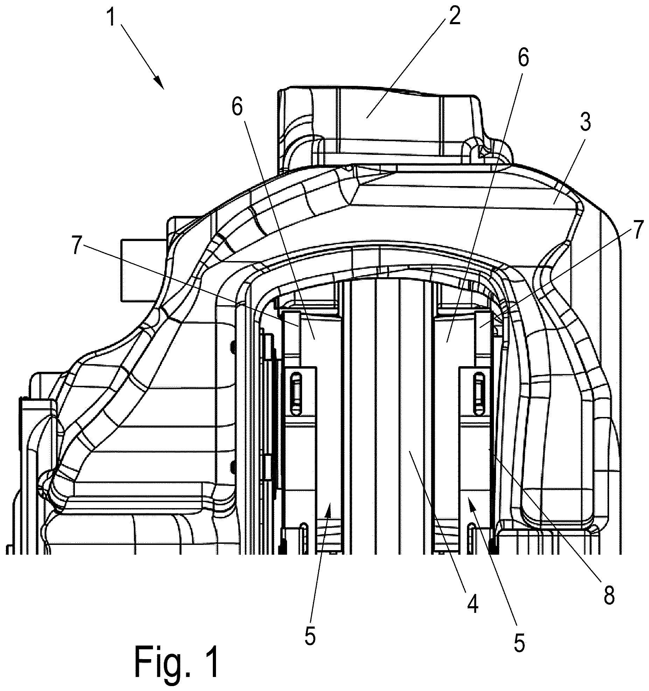

In Figur 1 ist mit dem Bezugszeichen 1 insgesamt ein Ausführungsbeispiel einer erfindungsgemäßen Scheibenbremse gekennzeichnet. Die Scheibenbremse 1 weist eine Zuspannvorrichtung auf, einen eine Bremsscheibe 4 übergreifenden Bremssattel 3, der vorzugsweise als Schiebesattel ausgeführt ist. Die Scheibenbremse 1 weist des Weiteren vorzugsweise eine Belagverschleißnachstellvorrichtung auf zur Regulierung des Lüftspiels zwischen der Bremsscheibe 4 und den beidseits der Bremsscheibe 4 angeordneten Bremsbeläge 5, welche jeweils einen Belagträger und mindestens einen Reibbelag 6 aufweisen. Die Bremsbeläge 5 sind dabei in einem Bremsträger 2 mit den Umfangsrichtungen der Bremsscheibe 4 gegenüberliegenden Führungsflächen 21 parallel zu einer Drehachse der Bremsscheibe 4 verschiebbar geführt und von einer Zuspannkraft betätigbar. Die Scheibenbremse 1 kann beispielsweise als druckluftbetätigte Scheibenbremse 1 ausgeführt sein.

Jeder der Bremsbeläge 5 ist reversibel verschiebbar zwischen den Führungsflächen 21 des Bremsträgers 2 parallel zur Drehachse der Bremsscheibe 4 geführt. Die Längsrichtung des Belagträgers 7 verläuft tangential zur Bremsscheibe 4. Senkrecht zu dieser Längsrichtung erstreckt sich der Belagträger 6 in radialer Richtung der Bremsscheibe 4.

Die Reibfläche der Bremsscheibe 4 steht der Belagreibfläche des Bremsbelags 5 gegenüber. Ein Abstand zwischen dem Bremsbelag 5 bzw. zwischen den Bremsbelägen 5 und der Bremsscheibe 4 wird dabei als Lüftspiel bezeichnet. Bei einem Bremsvorgang wird bei Betätigung der Scheibenbremse 1 zunächst das Lüftspiel überbrückt, in dem der Bremsbelag 5 aus der Ausgangsposition gegen die Bremsscheibe 4 in Zustellrichtung, in der auch eine Zuspannkraft Z wirkt, zugespannt wird. Das Lüftspiel vergrößert sich dabei aufgrund des Verschleißes der Reibbeläge 6 der Bremsbeläge 5 sowie der Bremsscheibe 4.

Sobald beim Zuspannen der Scheibenbremse das Lüftspiel überbrückt ist, bewirkt das weitere Zuspannen durch Anpressen der Bremsbeläge an die Bremsscheibe 4 eine Bremsung.

Wird die Zuspannvorrichtung gelöst, dient eine Rückstelleinrichtung zur Rückstellung der Bremsbeläge 5 aus der zugespannten Stellung in eine gelöste Stellung dazu, das Lüftspiel zwischen den Bremsbelägen 5 und der Bremsscheibe 4 wiederherzustellen. Ein Nachstellen der Bremsbeläge 5 aufgrund von Verschleiß zur Einstellung des Lüftspiels auf einen vorher festgelegten Wert wird beispielsweise von einer Nachstellvorrichtung vorgenommen, die hier nicht weiter erläutert werden soll.

Die Rückstelleinrichtung, welche zumindest den rückseitigen Bremsbelag 5 mit dem Belagträger 7 an dem Bremsträger 2 abstützt, umfasst mindestens zwei Rückstellelemente, die parallel zur Drehachse der Bremsscheibe 4 verschiebbar geführt an dem Belagträger 7 zumindest des rückseitigen Bremsbelags angebracht sind.

Vorzugsweise ist auch der zuspannseitige Bremsbelag 5 mit zwei oder mehr Rückstellelementen ausgestattet. Der zuspannseitige Bremsbelag 5 kann aber auch durch eine Anbindung an Druckstücke der Zuspannvorrichtung von der Bremsscheibe 4 beim Lösen der Scheibenbremse 1 gelöst werden.

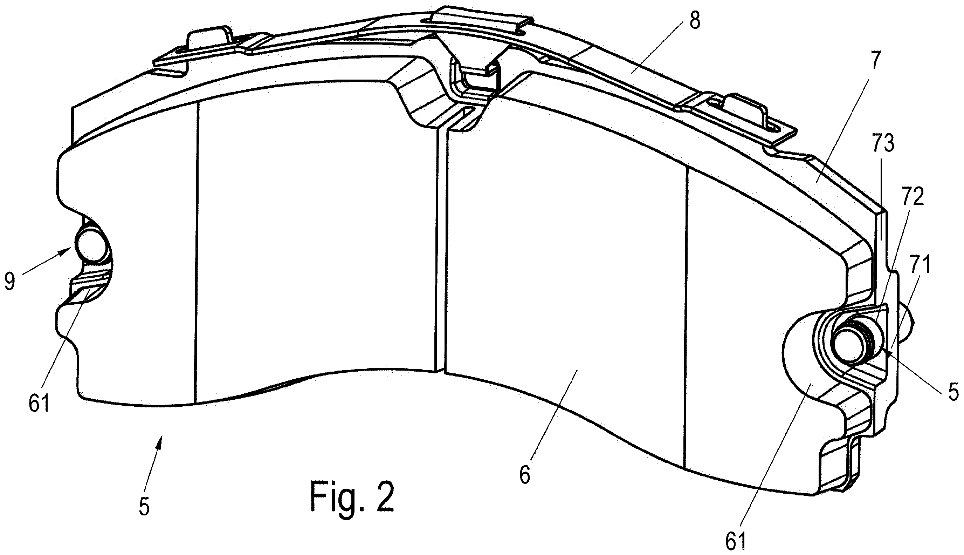

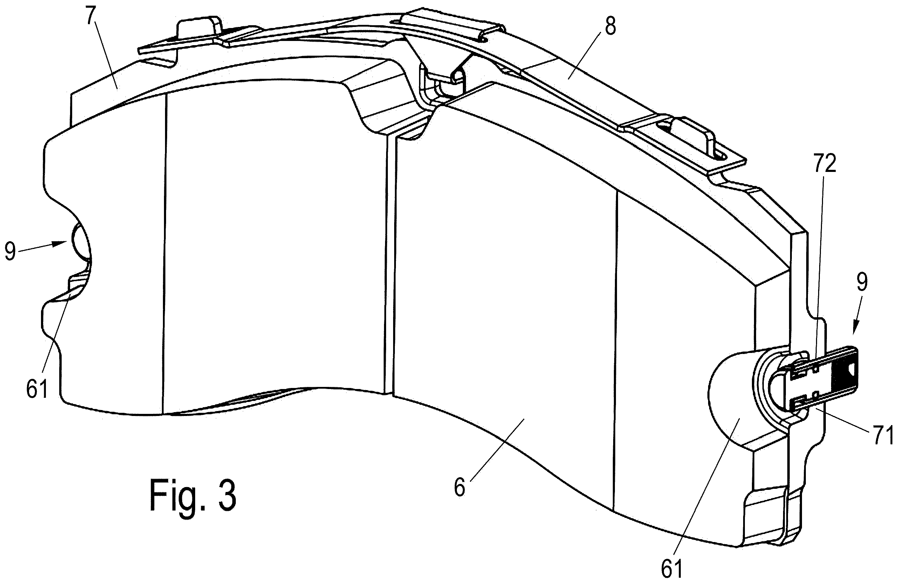

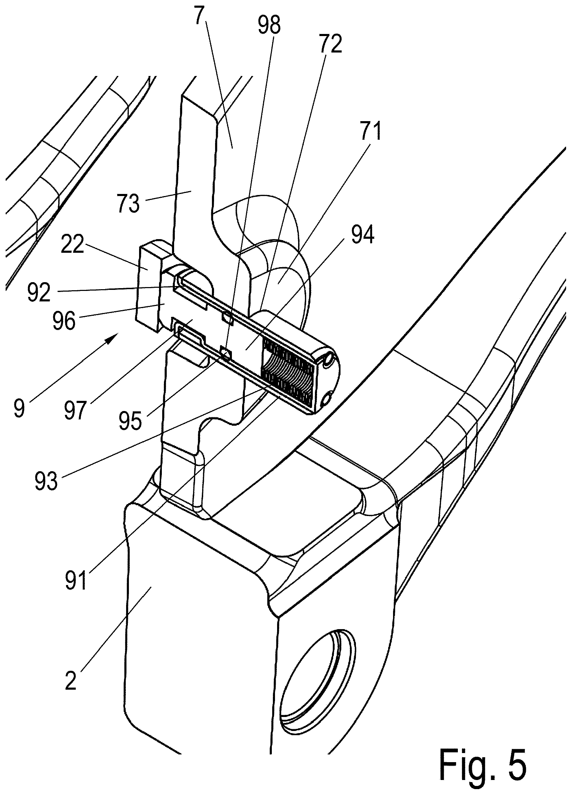

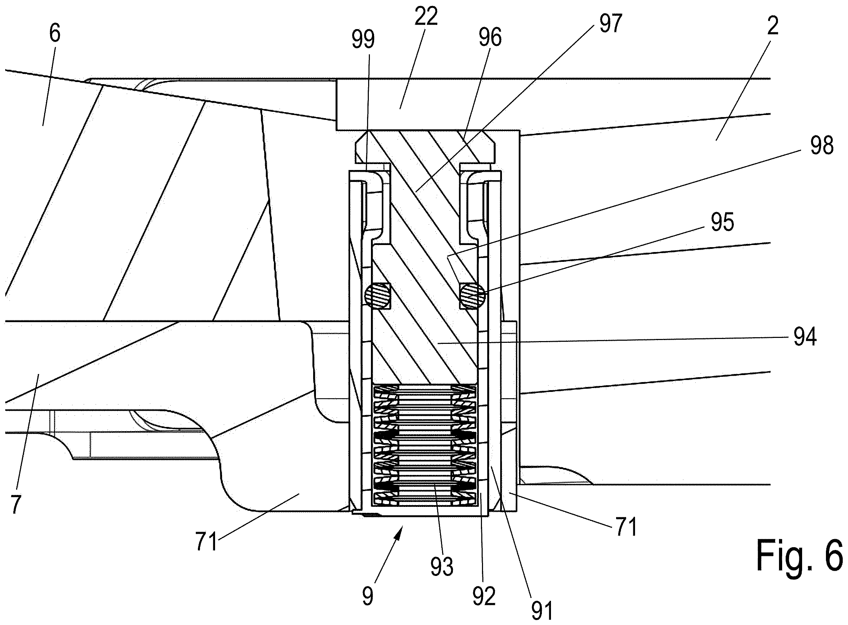

Wie in den Figuren 2 bis 8 gezeigt ist, sind die Rückstellelemente 9, 9', 9" als in Aufnahmebohrungen 72 des Belagträgers 7 parallel zur Drehachse der Bremsscheibe 4 verschiebbar gelagerten Hülsen ausgebildet, aus denen zur Bremsscheibe 4 hin jeweils ein elastisch gegen eine vorbestimmte Kraft rückstellbarer Rückstellkopf 94, 94" hervorsteht, der an einer aus den Führungsflächen 21 in Umfangsrichtung der Bremsscheibe 4 hervorstehenden Stützfläche 22 abstützbar ist.

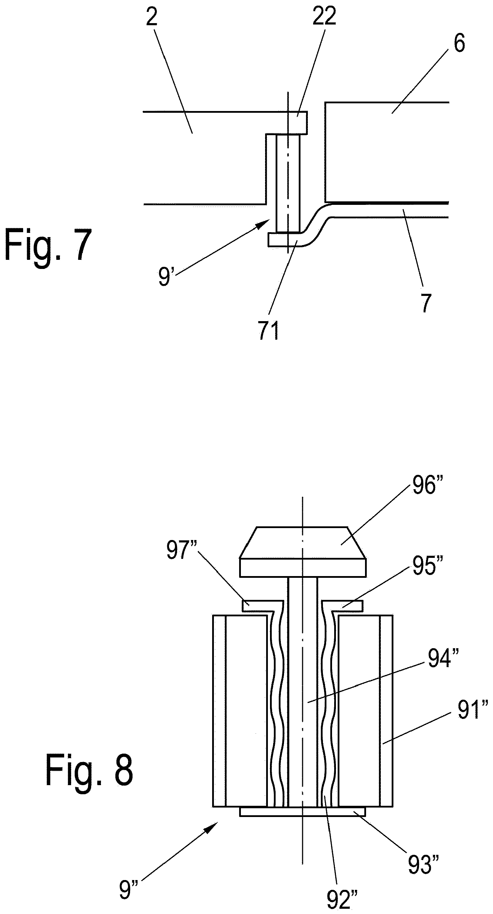

In den Figuren 2 bis 6 ist dabei eine erste Ausführungsvariante der Rückstellelemente 9 dargestellt, während die Figuren 7 und 8 jeweils alternative Ausführungsvarianten eines solchen Rückstellelementes 9', 9" zeigen.

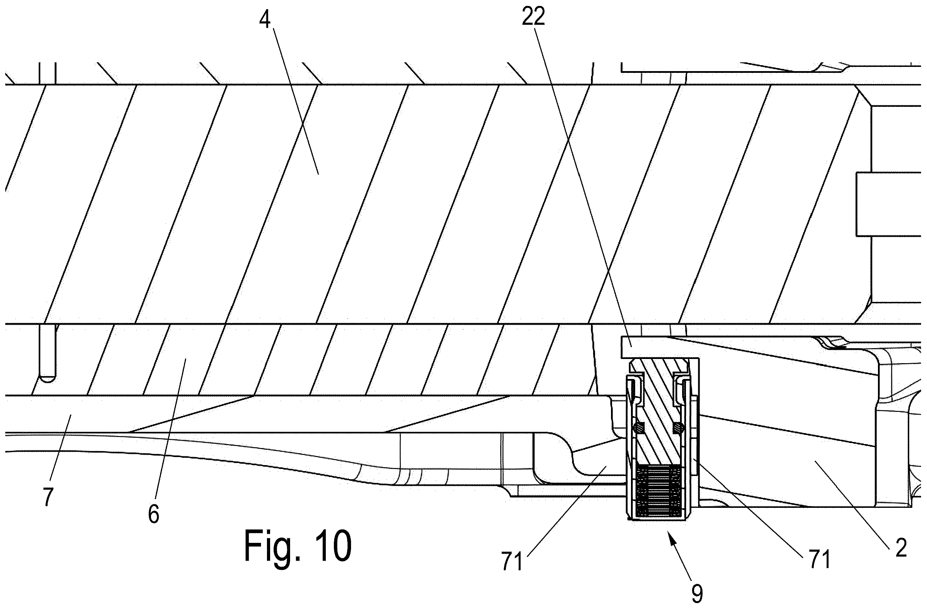

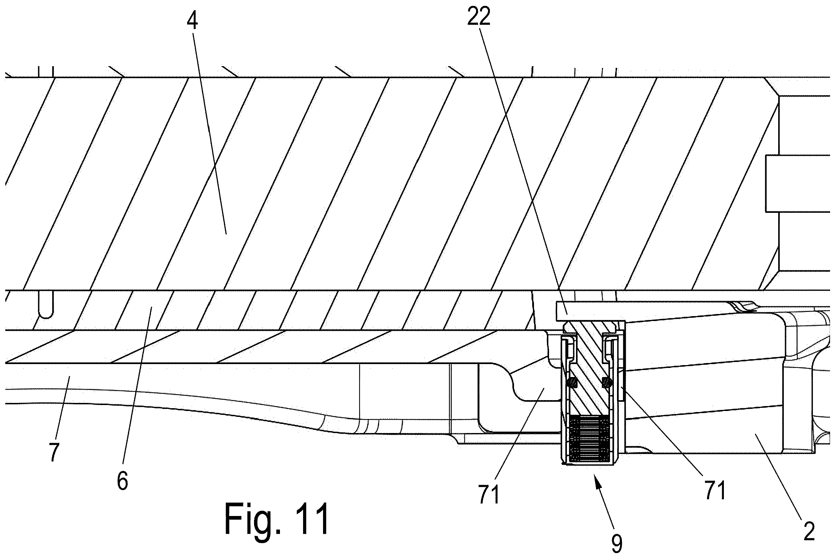

Bezugnehmend auf die Ausführungsvariante gemäß der Figuren 2 bis 6 und 9 bis 11 sind die Aufnahmebohrungen 72 in einem Belagträger 7 an in Umfangsrichtung der Bremsscheibe 4 äußeren Randbereichen ausgebildeten Vertiefungen 71, vorzugsweise Kröpfungen vorgesehen. Diese Vertiefungen 71 sind dabei vom Reibbelag 6 weg ausgebildet, um auch bei nahezu vollständig verschlissenen Reibbelägen 6 einen zum Wegdrücken des Bremsbelags notwendigen Hub bewerkstelligen zu können.

Die Reibbeläge 6 sind vorzugsweise mit den Rückstellelementen 9 zumindest teilweise umgreifenden Aussparungen 61 ausgebildet, um trotz eingebauter Rückstellelemente 9 eine möglichst große Reibfläche zu erhalten.

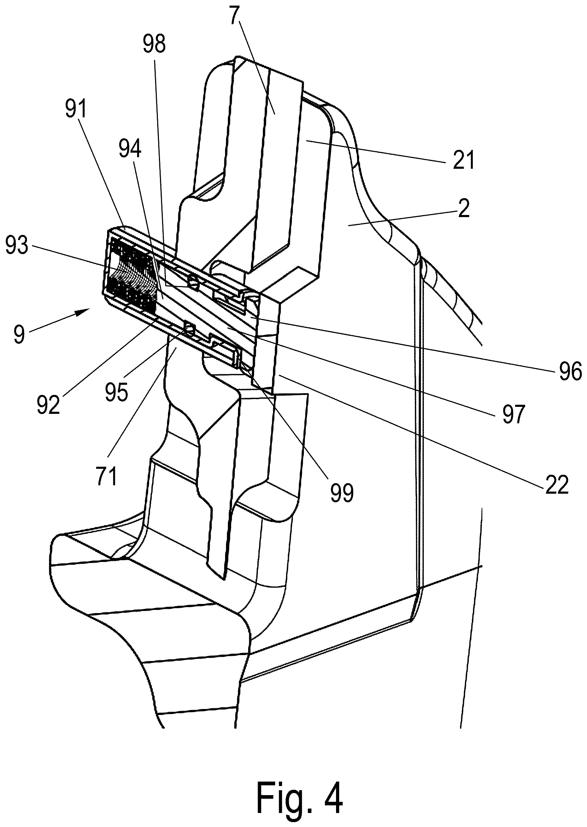

Wie in den Figuren 4 bis 6 zu erkennen ist, ist ein Außenmantel 91 der Rückstellelemente 9 vorzugsweise als Spannhülse ausgebildet, die einerseits so fest im Belagträger 7 festgelegt ist, um ohne Verschiebung den Bremsbelag 5 von der Bremsscheibe 4 wegzudrücken, gleichzeitig aber durch Einwirken höherer Axialkräfte, wie sie bei einem Zuspannvorgang von der Zuspannvorrichtung ausgeübt werden, üblicherweise von Kräften größer 500 Newton, in der Aufnahmebohrung 72 des Belagträgers 7 verschiebbar sind.

Anstelle der Ausbildung als Spannhülse ist es auch denkbar, den Außenmantel 91 des Rückstellelements 9 mit einer Rändelung zu versehen, welche bei zunehmendem Belagverschleiß relativ zum Belagträger 7 in der Aufnahmebohrung 72 verschiebbar ist.

Das Rückstellelement 9 weist des Weiteren eine Andruckfläche 96 auf sowie einen senkrecht zur Andruckfläche 96 in den Außenmantel 91 hineinragenden Achskörper 97, der in der in den Figuren 4 bis 6 gezeigten Ausführungsvariante auf mindestens einer an dem Außenmantel 91 gelagerten Feder 93, insbesondere einer Spiralfeder oder einer oder mehreren Tellerfedern, abgestützt ist.

Der Achskörper 94 weist vorzugsweise eine Aussparung oder Nut 98 zur Aufnahme einer Dichtung 95, beispielsweise in Gestalt eines O-Ringes auf, der bzw. die sich nach außen an eine den Achskörper 94 umgreifenden Hülsenelement 92 abstützt, das in einem Bereich unterhalb der senkrecht zum Achskörper 94 stehenden Andruckfläche 96 mit einer Einrollierung versehen ist, wobei ein oberes Ende des Hülsenelements 92 parallel zur Andruckfläche 96 gebogen ist und sich auf der der Andruckfläche 96 zugewandten Stirnfläche des Außenmantels 91 abstützt.

In der in Figur 8 dargestellten alternativen Ausführungsvariante des Rückstellelements 9" ist der Rückstellkörper 94" über Federn an dem Außenmantel 91" gehalten. Hier wird durch Andrücken der Andruckfläche 96" an die Stützfläche 22 des Bremsträgers eine Verlängerung der Feder 95" bewirkt, die nach erfolgtem Bremsvorgang den Bremsbelag durch Herausdrücken der Stützfläche 96" gegenüber dem Außenmantel 91 ", der an dem Belagträger hinreichend fest fixiert ist, von der Bremsscheibe 4 gelöst, wobei die Feder 95" wieder in ihre in Figur 8 gezeigte Ausgangsposition rückfedert. Eine Vorspannung dieser Feder 95" wird dadurch erreicht, dass sie auf der der Andruckfläche 96" gegenüberliegenden Stirnseite des Außenmantels 91" an einer Konterplatte 93" fixiert ist.

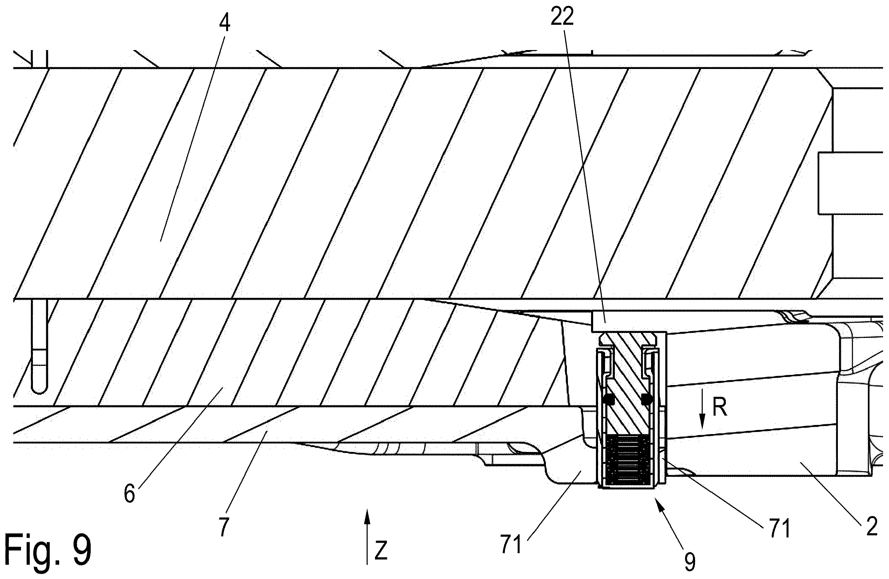

Beiden Ausführungsvarianten gemeinsam ist, dass die Andruckfläche 96, 96" auf einer der Stützfläche 22 zugewandten Stirnseite des Außenmantels 91, 91" abstützbar ist und so während eines Zuspannvorgangs die Andruckfläche 96, 96" zunächst auf die der Stützfläche 22 zugewandten Stirnseite des Außenmantels 91, 91" gedrückt wird und mit fortschreitendem Belagverschleiß, wie er in den Figuren 9 bis 11 dargestellt ist, die Rückstellelemente 9, 9', 9" weiter in die Aufnahmebohrung 72 des Belagträgers 7 hineingedrückt wird. Diese "automatische Verschleißnachstellung" der Rückstellelemente 9, 9', 9" wird insbesondere dadurch erreicht, dass die Rückstellelemente 9, 9', 9" bis zu einer parallel zur Drehachse der Bremsscheibe 4 wirkenden Kraft, die kleiner ist als die von der Zuspannvorrichtung bei einem Bremsvorgang aufgebrachte Zuspannkraft Z ortsfest im Belagträger 7 gehalten sind und somit erst bei einer Kraft, die infolge eines Zuspannvorgangs auf die Rückstellelemente ausgeübt wird, die Rückstellelemente 9, 9', 9" in den Aufnahmebohrungen 72 relativ zum Belagträger 7 verschoben werden können.

In einer Ausführungsvariante, in der die Rückstelleinrichtungen sowohl im rückseitigen Bremsbelag als auch im zuspannseitigen Bremsbelag 5 vorgesehen sind, ist es unter Umständen vorteilhaft, wenn die Rückstelleinrichtungen auf den unterschiedlichen Seiten der Bremsscheibe 4 unterschiedlich hohe Rückstellkräfte aufweisen.

Dies gilt insbesondere dann, wenn die zuspannseitigen Bremsbeläge 5 an die Zuspannvorrichtung angekoppelt sind und beim Lösen der Zuspannvorrichtung die Bremsbeläge von der Bremsscheibe 4 zurückgezogen werden. Die Rückstellelemente der reaktionsseitigen Bremsbeläge verschieben hier bevorzugt den gesamten Sattel und müssen aus diesem Grund die Bremssattelverschiebekraft, die im Führungssystem des Bremssattels entsteht, überwinden.

Die oben beschriebenen Ausführungsbeispiele schränken die Erfindung nicht ein, sondern die Erfindung ist im Rahmen der beigefügten Ansprüche modifizierbar.

### Bezugszeichenliste

- 1: Scheibenbremse
- 2: Bremsträger
- 3: Bremssattel
- 4: Bremsscheibe
- 5: Bremsbelag
- 6: Reibbelag
- 7: Belagträger
- 9: Rückstellelemente
- 9': Rückstellelemente
- 9": Rückstellelemente

- 21: Führungsfläche
- 22: Stützfläche

- 61: Aussparung

- 71: Kröpfung
- 72: Aufnahmebohrung

- 91: Außenmantel
- 91": Außenmantel
- 92: Hülsenelement
- 93: Feder
- 93": Konterplatte
- 94: Rückstellkopf
- 94": Rückstellkopf
- 95: Dichtung
- 95": Feder
- 96: Andruckfläche
- 96": Andruckfläche
- 97: Achskörper
- 98: Einbuchtung

- Z: Zuspannkraft

## Patentansprüche

1. Scheibenbremse (1), insbesondere für ein Kraftfahrzeug, aufweisend
- eine Zuspannvorrichtung,
- einen eine Bremsscheibe (4) übergreifenden Bremssattel (3),
- einen Bremsträger (2) mit in Umfangsrichtung der Bremsscheibe (4) gegenüberliegenden Führungsflächen (21),
- wobei zwischen den Führungsflächen (21) zuspannseitig und rückseitig der Bremsscheibe (4) jeweils mindestens ein Bremsbelag (5) mit einem Belagträger (7) und mindestens einem Reibbelag (6) parallel zu einer Drehachse der Bremsscheibe (4) verschiebbar geführt und von einer Zuspannkraft (Z) betätigbar ist,
- und mindestens eine Rückstelleinrichtung mit mindestens zwei Rückstellelementen (9, 9', 9"), welche zumindest den rückseitigen Bremsbelag (5) mit dem Belagträger (7) an dem Bremsträger (2) abstützt, wobei die Rückstellelemente (9, 9', 9") parallel zur Drehachse der Bremsscheibe (4) verschiebbar geführt an dem Belagträger (7) zumindest des rückseitigen Bremsbelags (4) angebracht sind,
**dadurch gekennzeichnet, dass**
die Rückstellelemente (9, 9', 9") als in Aufnahmebohrungen (72) des Belagträgers (5) parallel zur Drehachse der Bremsscheibe (4) verschiebbar gelagerten Hülsen ausgebildet sind, aus denen zur Bremsscheibe (4) hin jeweils ein elastisch gegen eine vorbestimmte Kraft rückstellbarer Rückstellkopf (94, 94") hervorsteht, der an einer aus den Führungsflächen (21) in Umfangsrichtung der Bremsscheibe (4) hervorstehenden Stützfläche (22) abstützbar ist

2. Scheibenbremse (1) nach Anspruch 1, **dadurch gekennzeichnet, dass** die Aufnahmebohrungen (72) in an dem Belagträger (7) an in Umfangsrichtung der Bremsscheibe (4) äußeren Randbereichen ausgebildeten Vertiefungen (71) vorgesehen sind.

3. Scheibenbremse (1) nach einem der vorstehenden Ansprüche, **dadurch gekennzeichnet, dass** der Reibbelag (6) des Bremsbelags (4) mit die Rückstellelemente (9) zumindest teilweise umgreifenden Aussparungen (61) ausgebildet ist.

4. Scheibenbremse (1) nach einem der vorstehenden Ansprüche, **dadurch gekennzeichnet, dass** ein Außenmantel (91, 91") der Rückstellelemente (9, 9', 9") als Spannhülse ausgebildet ist.

5. Scheibenbremse (1) nach einem der vorstehenden Ansprüche, **dadurch gekennzeichnet, dass** ein Außenmantel (91, 91") der Rückstellelemente (9, 9', 9") mit einer Rändelung versehen ist.

6. Scheibenbremse (1) nach einem der vorstehenden Ansprüche, **dadurch gekennzeichnet, dass** der Rückstellkopf (94, 94") eine Andruckfläche (96, 96") und ein senkrecht zur Andruckfläche (96, 96") in den Außenmantel (91, 91 ") hineinragenden Achskörper (97, 94") aufweist.

7. Scheibenbremse (1) nach Anspruch 6, **dadurch gekennzeichnet, dass** der Achskörper (94") überfedert in dem Außenmantel (91, 91 ") gehalten ist.

8. Scheibenbremse (1) nach Anspruch 6, **dadurch gekennzeichnet, dass** der Achskörper (94") auf mindestens einer in dem Außenmantel (91, 91") gelagerten Feder (93), insbesondere Spiral- oder Tellerfeder, abgestützt ist.

9. Scheibenbremse (1) nach einem der vorhergehenden Ansprüche, **dadurch gekennzeichnet, dass** die Andruckfläche (96, 96") auf einer der Stützfläche (22) zugewandten Stirnseite des Außenmantels (91, 91 ") abstützbar ist.

10. Scheibenbremse (1) nach einem der vorhergehenden Ansprüche, **dadurch gekennzeichnet, dass** die Rückstellelemente (9, 9', 9") bis zu einer parallel zur Drehachse der Bremsscheibe (4) wirkenden Kraft, die kleiner ist als die von der Zuspannvorrichtung bei einem Bremsvorgang aufgebrachte Zuspannkraft (Z), ortsfest im Belagträger (7) gehalten sind.

11. Scheibenbremse (1) nach einem der vorhergehenden Ansprüche, **dadurch gekennzeichnet, dass** die Rückstelleinrichtungen auf unterschiedlichen Seiten der Bremsscheibe (4) unterschiedlich hohe Rückstellkräfte (R) aufweisen.

12. Bremsbelag (5) einer Scheibenbremse (1) mit einem Belagträger (7), mindestens einem Reibbelag (6) und einer Rückstelleinrichtung mit mindestens zwei Rückstellelementen (9, 9', 9"), **dadurch gekennzeichnet, dass** die Rückstellelemente (9, 9', 9") gemäß einem der vorhergehenden Ansprüche ausgebildet sind.

## Claims

1. Disc brake (1), in particular for a motor vehicle, comprising
- an application device,
- a brake calliper (3) encompassing a brake disc (4),
- an adapter (2) with guide faces (21) which lie opposite one another in the circumferential direction of the brake disc (4),
- in each case at least one brake pad (5) with a backing plate (7) and at least one friction lining (6) being guided displaceably parallel to a rotational axis of the brake disc (4) between the guide faces (21) on the application side and on the rear side of the brake disc (4), and being capable of actuation by an application force (Z),
- and further comprising at least one restoring device with at least two restoring elements (9, 9', 9"), which supports at least the rear brake pad (5) with the backing plate (7) on the adapter, the restoring elements (9, 9', 9") being mounted on the backing plate (7) of at least the rear brake pad (4) and guided displaceably parallel to the rotational axis of the brake disc (4),
**characterised in that**
the restoring elements (9, 9', 9") are configured as sleeves which are mounted in receptacle holes (72) of the backing plate (7) such that they can be displaced parallel to the rotational axis of the brake disc (4), from which sleeves in each case one restoring head (94, 94") which can be restored elastically counter to a predefined force protrudes toward the brake disc (4), which restoring head (94, 94") can be supported on a supporting face (22) which protrudes from the guide faces (21) in the circumferential direction of the brake disc (4).

2. Disc brake (1) according to claim 1, **characterised in that** the receptacle holes (72) are provided in depressions (71) which are formed on the backing plate (7) in outer edge regions in the circumferential direction of the brake disc (4).

3. Disc brake (1) according to any of the preceding claims, **characterised in that** the friction lining (6) of the brake pad (4) is configured with cutouts (61) which at least partially encompass the restoring elements (9).

4. Disc brake (1) according to any of the preceding claims, **characterised in that** an outer casing (91, 91") of the restoring elements (9, 9', 9") is configured as a clamping sleeve.

5. Disc brake (1) according to any of the preceding claims, **characterised in that** an outer casing (91, 91 ") of the restoring elements (9, 9', 9") is provided with a knurled portion.

6. Disc brake (1) according to any of the preceding claims, **characterised in that** the restoring head (94, 94") has a pressing face (96, 96") and an axle body (97, 94") which protrudes into the outer casing (91, 91") perpendicularly with respect to the pressing face (96, 96").

7. Disc brake (1) according to claim 6, **characterised in that** the axle body (94") is held in an oversprung manner in the outer casing (91, 91 ").

8. Disc brake (1) according to claim 6, **characterised in that** the axle body (94") is supported on at least one spring (93), in particular a helical or disc spring, which is mounted in the outer casing (91, 91 ").

9. Disc brake (1) according to any of the preceding claims, **characterised in that** the pressing face (96, 96") can be supported on an end face of the outer casing (91, 91 "), which end face faces the supporting face (22).

10. Disc brake (1) according to any of the preceding claims, **characterised in that** the restoring elements (9, 9', 9") are held in a stationary manner in the backing plate (7) up to a force which acts parallel to the rotational axis of the brake disc (4) and is smaller than the brake application force (Z) which is applied by the application device in the case of a braking operation.

11. Disc brake (1) according to any of the preceding claims, **characterised in that** the restoring devices have restoring forces (R) of different magnitude on different sides of the brake disc (4).

12. Brake pad (5) of a disc brake (1) comprising a backing plate (7), at least one friction lining (6) and a restoring device with at least two restoring elements (9, 9', 9"), **characterised in that** the restoring elements (9, 9', 9") are designed in accordance with any of the preceding claims.

## Revendications

1. Frein (1) à disque, notamment pour un véhicule automobile, comprenant :
- un dispositif de serrage,
- un étrier (3) de frein enjambant le disque (4) de frein,
- un porte-frein (2) ayant des surfaces (21) de guidage opposées dans la direction périphérique du disque (4) de frein,
- dans lequel, entre les surfaces (21) de guidage, du côté serrage et du côté arrière du disque (4) de frein, sont guidées à coulissement parallèlement à un axe de rotation du disque (4) de frein et peuvent être actionnées par une force (Z) de serrage, respectivement au moins une garniture (5) de frein ayant un porte-garniture (7) et au moins une garniture (6) de friction,
- et au moins un dispositif de rappel ayant au moins deux éléments (9, 9', 9") de rappel, qui appuient au moins la garniture (5) de frein du côté arrière ayant le porte-garniture (7) sur le porte-frein (2), les éléments (9, 9', 9") de rappel étant mis, en étant guidés à coulissement parallèlement à l'axe de rotation du disque (4) de frein, sur le porte-garniture (7) de la au moins une garniture (4) de frein du côté arrière,
**caractérisé en ce que**
les éléments (9, 9', 9") de rappel sont constitués sous la forme de manchons montés coulissants parallèlement à l'axe de rotation du disque (4) de frein dans des trous (72) de réception du porte-garniture (5), manchons dont fait saillie vers le disque (4) de frein respectivement une tête (94, 94") de rappel pouvant être rappelée élastiquement à l'encontre d'une force définie à l'avance, tête qui peut s'appuyer sur une surface (22) d'appui en saillie des surfaces (21) de guidage dans la direction périphérique du disque (4) de frein.

2. Frein (1) à disque suivant la revendication 1, **caractérisé en ce que** les trous (72) de réception sont prévus dans des cavités (71) formées sur le porte-garniture (77) en des régions de bord extérieures dans la direction périphérique du disque (4) de frein.

3. Frein (1) à disque suivant l'une des revendications précédentes, **caractérisé en ce que** la garniture (6) de friction de la garniture (4) de frein est constituée en ayant des évidements (61) entourant, au moins en partie, les éléments (9) de rappel.

4. Frein (1) à disque suivant l'une des revendications précédentes, **caractérisé en ce qu'**une enveloppe (91, 91") extérieure des éléments (9, 9', 9") de rappel est constituée sous la forme d'un manchon de serrage.

5. Frein (1) à disque suivant l'une des revendications précédentes, **caractérisé en ce qu'**une enveloppe (91, 91") extérieure des éléments (9, 9', 9") de rappel est pourvue d'un moletage.

6. Frein (1) à disque suivant l'une des revendications précédentes, **caractérisé en ce que** la tête (94, 94") de rappel a une surface (96, 96") d'application d'une pression et un corps (97, 94") d'axe pénétrant perpendiculairement à la surface (96, 96") d'application d'une pression dans l'enveloppe (91, 91") extérieure.

7. Frein (1) à disque suivant la revendication 6, **caractérisé en ce que** le corps (94") d'axe est maintenu par ressort dans l'enveloppe (91, 91") extérieure.

8. Frein (1) à disque suivant la revendication 6, **caractérisé en ce que** le corps (94") d'axe s'appuie sur au moins un ressort (93) monté dans l'enveloppe (91, 91") extérieure, notamment un ressort hélicoïdal ou un ressort à disque.

9. Frein (1) à disque suivant l'une des revendications précédentes, **caractérisé en ce que** la surface (96, 96") d'application d'une pression peut s'appuyer sur un côté frontal, tourné vers la surface (22) d'appui, de l'enveloppe (91, 91") extérieure.

10. Frein (1) à disque suivant l'une des revendications précédentes, **caractérisé en ce que** les éléments (9, 9', 9") de rappel sont maintenus à poste fixe dans le porte-garniture (7) jusqu'à une force, qui s'applique parallèlement à l'axe de rotation du disque (4) de frein et qui est plus petite que la force (Z) de serrage appliquée par le dispositif de serrage lors d'une opération de freinage.

11. Frein (1) à disque suivant l'une des revendications précédentes, **caractérisé en ce que** les dispositifs de rappel ont, sur des faces différentes du disque (4) de frein, des forces (R) de rappel d'intensité différente.

12. Garniture (5) de frein d'un frein (1) à disque ayant un porte-garniture (7), au moins une garniture (6) de friction et un dispositif de rappel ayant au moins deux éléments (9, 9', 9") de rappel, **caractérisée en ce que** les éléments (9, 9', 9") de rappel sont constituées suivant l'une des revendications précédentes.
